# EUROPEAN PATENT SPECIFICATION

(11) **EP 0 450 897 B1**
(45) Date of publication and mention of the grant of the patent: **24.06.1998**
(21) Application number: 91302855.1
(22) Date of filing: 02.04.1991
(51) Int. Cl.: B01J 35/04, B22F 3/10, F01N 3/20, F01N 3/02, H05B 3/02

(54) **Heat-resistant metal monolith and manufacturing method therefor**
Hochhitzebeständiger metallischer Monolith und Verfahren zu seiner Herstellung
Monolithe métallique ayant une haute résistance à la chaleur et son procédé de fabrication

(30) Priority: 03.04.1990 JP 88955/90; 03.04.1990 JP 88956/90; 12.04.1990 JP 96867/90; 20.02.1991 JP 47534/91
(43) Date of publication of application: 09.10.1991
(73) Proprietor: NGK INSULATORS, LTD., Nagoya City Aichi Pref. (JP)
(72) Inventor: Harada, Takashi, Nagoya-city, Aichi-pref., 465 (JP); Mizuno, Hiroshige, Tajimi-city, Gifu-pref., 507 (JP); Abe, Fumio, Handa-city, Aich-pref., 475 (JP); Ohashi, Tsuneaki, Ohgaki City Gifu-prefecture 503 (JP)
(74) Representative: Paget, Hugh Charles Edward

(56) References cited:
- EP-A- 275 372
- WO-A-89/09648
- WO-A-89/10471
- US-A- 3 768 982
- US-A- 3 982 100
- US-A- 4 582 677
- US-A- 4 758 272
- WORLD PATENT INDEX, FILE SUPPLIER, abstract no. AN=89-230340, Derwent Publications Ltd, London, GB; && JP-A-1 164 444 (CALSONIC CORP.) 28-06-1989
- IDEM
- WORLD PATENT INDEX, FILE SUPPLIER, Abstract no. AN=83-756542, Derwent Publications Ltd, London, GB; && JP-A-58 129 493 (MITSUBISHI ELECTRIC CORP.)
- PATENT ABSTRACTS OF JAPAN, vol. 12, no. 286 (M-727), 5th August 1988; & JP-A-63 062 802 (NIPPON TUNGSTEN CO., LTD) 19-03-1988
- PATENT ABSTRACTS OF JAPAN, vol. 13, no. 392 (M-865)[3740], 30th August 1989; & JP-A-1 139 906 (BABCOCK HITACHI K.K.) 01-06-1989

## Description

### BACKGROUND OF THE INVENTION

### Field of the Invention:

The present invention relates to a heat-resistant metallic monolith suitable for use as a catalyst carrier, a heater or a catalytic converter and a method for manufacturing such a heat-resistant metallic monolith.

### Description of the Related Art:

Conventionally, porous ceramic honeycomb structures have been employed as catalysts or carriers for catalysts for removing, for example, nitrogen oxides, carbon monoxide and hydrocarbon present in the exhaust gas of internal combustion engines, such as automobiles, or filters for removing fine particles.

Whereas porous ceramic honeycomb structures continue to be a popular and useful material in such environments, there has been a desire to develop materials exhibiting greater mechanical strength and thermal resistance in hostile environments. Accordingly, a honeycomb structure produced by winding a metal plate in a corrugated fashion has been proposed in U.K. Patent 1492929 and used.

However, in this foil type metal honeycomb structure, the catalyst layers cannot be closely adhered to the metal substrate with a coating formed thereon because of its low porosity, and a ceramic catalyst readily peels off the metal substrate due to a difference in the thermal expansion between the ceramic catalyst and the metal substrate. Furthermore, telescope phenomenon readily occurs during the run cycle in which a metal to metal join breaks and the metal substrate deforms in such a manner that it protrudes in the direction of the flow of gas. This may disturb safe running of the vehicle. Furthermore, in the manufacture of the foil type metal honeycombs, yield of the rolling process is low, inviting high production cost.

Honeycomb structures manufactured by forming metal powders and by sintering the formed body are also known. Such honeycomb structures have been proposed in, for example, United States Patent No. 4,758,272, Japanese Patent Laid-Open Nos. 5780̸3/1982 and 5790̸4/1982, Japanese Patent Publication No.6974/1982, and Japanese Utility Model Publication No. 6760̸9/1988.

The honeycomb structure disclosed in United States Patent No. 4,758,272 has a composition essentially consisting, as analyzed in weight percent, of 5 to 50̸% Aℓ, 30̸ to 90̸% Fe, 0̸ to 10̸% Sn, 0̸ to 10̸% Cu, 0̸ to 10̸% Cr and not more than 1% Mg and/or Ca. This honeycomb structure has a porosity of about 25 to 75% by volume and a predetermined cell density.

However, since this honeycomb structure has no heat-resistant metal oxide coating formed thereon and is therefore not heat-resistant, an oxide film may be partially formed on the honeycomb structure when it is used as a filter, differentiating the characteristics, such as thermal expansion or ductility, and increasing the possibility of the honeycomb structure being broken.

The honeycomb structure disclosed in Japanese Patent Publication No. 6974/1982 is manufactured by binding a large number of small honeycomb components made of powders of catalytic activating substances which act as catalysts for use in automobile exhaust emission control, such as nickel, copper and chromium. However, oxidation process is performed at a low temperature to achieve catalytic activity, and it is therefore impossible to accomplish sufficient heat-resistance. Furthermore, this honeycomb structure is not a monolithic body and may be broken due to vibrations given to it during the operation.

The metal honeycomb structures disclosed in Japanese Patent Laid-Open Nos. 5780̸3/1982 and 5780̸4/1982 are manufactured by preparing a mixture of metal powders, a thermosetting binder, a colloidal silica and so on, by forming the mixture into a honeycomb configuration by the extrusion and then sintering the shaped body after it has been hardened. Like United States Patent No. 4,758,272, however, Japanese Patent Laid-Open Nos. 5780̸3/1982 and 57804/1982 do not disclose the provision of a heat-resistant coating. So, these metal honeycomb structures may be broken when used as, for example, a catalyst carrier.

In the preheater proposed in Japanese Utility Model Laid-Open No. 67609/1988, coated alumina readily peels off metal support due to a difference in thermal expansion between alumina and the metal support. Furthermore, a metal to metal join of the metal substrate breaks during the operation, generating an electrically insulating portion and, hence, non-uniform flow of current and non-uniform heating.

Meanwhile, as for the heat-resistant film, it is described in U.S. Patent No. 4915751 to effect heat treatment twice at 900-960°C and 960-1,000°C to form alumina whiskers. This approach, however, has no effect for oxidation resistance. Also, in Japanese patent Laid-Open No. 75040/1989, it is described to coat the surface layer of a base material (stainless steel) with an alkoxide or the like to form a protective film. However, the alkoxide is expensive; the base material is produced by melting and rolling and has no pores, and accordingly is not a porous alloy.

WO 89/09648 discloses a sintered porous honeycomb body for filtering particles from flue gas. The material of the honeycomb body may be selected from a range of metals and metal-like materials including aluminium, copper and iron, and alloys thereof, steel and silicon carbide. The honeycomb body may have an oxide coating.

### SUMMARY OF THE INVENTION

An object of the present invention is to provide a metallic honeycomb monolith which exhibits high resistance to heat, corrosion and oxidation and excellent ductility and a method of manufacturing such a metallic honeycomb monolith.

To this end, the present invention provides a heat-resistant metallic monolith comprising:
a porous sintered metal monolith manufactured by forming metal powders into a shape of a honeycomb configuration having a plurality of passages partitioned by walls and sintering said shape, said metal monolith consisting essentially of 3 to 20% by weight of Al, 12 to 25% by weight of Cr, 0 to 10% by weight of Sn, 0 to 10% by weight of Cu, the sum Sn and Cu being not more than 10% by weight, and the balance Fe; and
a heat-resistant metal oxide coated on a surface of cell walls and that of pores in said metal monolith.

The present invention also provides a method of manufacturing a heat-resistant metallic monolith, comprising the steps of:
mixing metal powders consisting essentially of 3 to 20% by weight of Al, 12 to 25% by weight of Cr, 0 to 10% by weight of Sn, 0 to 10% by weight of Cu, the sum Sn and Cu being not more than 10% by weight, and the balance Fe, an organic binder and water to prepare a mixture;
forming said mixture into a shape of a desired honeycomb configuration;
sintering said shape in a non-oxidizing atmosphere at a temperature between 1000 and 1450°C; and
coating a heat-resistant metal oxide on a surface of cell walls and that of pores of the obtained sintered body.

Extrusion, press shaping or slip casting etc. may be employed as forming or shaping method, and the extrusion (extruding method) is preferably employed.

The thus-obtained heat-resistant metallic monolith can be used as a catalyst carrier or a filter for removing the fine particles contained in the exhaust gas of automobiles. The heat-resistant metallic monolith of the present invention can also be employed to manufacture a heater. Manufacture of the heater is achieved by the provision of electrodes on the metallic monolith.

The present invention also provides a honeycomb heater comprising said heat-resistant metallic monolith, and at least two electrodes through which a current is supplied to said honeycomb structure to heat gas flow in passages formed in said honeycomb structure.

The heat-resistant metallic monolith of the present invention can also be employed to manufacture a catalytic converter. The catalytic converter may be manufactured by placing a catalyst on the metallic monolith and by providing electrodes on the metallic monolith. Also, the heat-resistant metallic monolith of the present invention can be employed to manufacture a catalytic converter which comprises a main monolith catalyst and a heater disposed adjacent to and upstream of the main monolith catalyst. This heater may be obtained by providing electrodes on the metallic monolith according to the present invention and by placing a catalyst on the metallic monolith, if necessary.

In the process of the present invention, it is preferable to mix metal powders to that the resulting metal powder material comprises at least 30̸% by weight of a pure iron powder, because the material gives a sintered metal of improved corrosion resistance.

Further, by keeping the sintered material in a hydrogen-containing gas atmosphere of 50̸0̸-1,30̸0̸°C, there can be formed a dense alumina-based protective film of excellent adhesion and heat resistance.

### BRIEF DESCRIPTION OF THE DRAWING

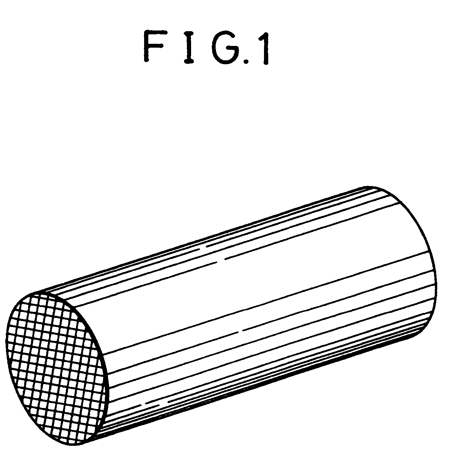

Fig. 1 is a perspective view of a honeycomb monolith according to the present invention.

### DETAILED DESCRIPTION OF THE INVENTION

The heat-resistant metallic monolith according to the present invention has a heat-resistant metal oxide coated on a surface of cell walls and that of pores of a metal monolith.

Hence, the heat-resistant metallic monolith contemplated in the present invention exhibits high resistance to heat and oxidation and therefore minimizes the possibility of breakage which would occur when it is used as a catalyst carrier, filter, honeycomb heater or a catalytic converter for use in automobile exhaust emission control.

When the proportion of Aℓ is less than 2.5%, resistance to oxidation at high temperature deteriorates. Inclusion of more than 30̸% Aℓ increases brittleness of the products and deteriorates the characteristics thereof inherent in metals. Inclusion of more than 40̸% Cr further increases brittleness of the products and production cost.

In the metal monolith of the present invention, 0̸ to 10̸% Sn and 0̸ to 10̸% Cu are present. Although presence of these elements lowers the sintering temperature, it deteriorates resistance to oxidation. The proportion is therefore at most 10̸% in total.

Below 90̸% of the sum of Fe, Aℓ and Cr the heat-resistance and ductility of the metal monolith deteriorate.

Presence of Mg and Ca promotes the sintering. However, it deteriorates the characteristics of the metal monolith, such as resistance to oxidation, and it is therefore desirable for them not to be present.

The preferred contents of C and N in the metal monolith according to the present invention is respectively 1% or below, and that of O is 3% or below.

Any heat-resistant metal oxide can be coated on the surface of the cell walls and that of the pores in the metal monolith according to the invention. Examples of such metal oxides include Aℓ₂O₃ and Cr₂O₃.

The heat-resistant metallic monolith, having the above-described composition and structure, can be used as a catalyst carrier or a filter for removing the fine particles contained in the exhaust gas of automobiles.

The heat-resistant metallic monolith of the present invention can also be employed to manufacture a heater for domestic use, such as a hot air heater, or an industrial heater, such as a heater or a preheater for use in automobile exhaust emission control. Manufacture of these heaters or a preheater is achieved by the provision of electrodes on the heat-resistant metallic monolith.

The heat-resistant metallic monolith of the present invention can also be employed to manufacture a catalytic converter which is achieved by placing a catalyst on the metallic monolith and by providing electrodes on the metallic monolith. Also, the heat-resistant metallic monolith of the present invention can be employed to manufacture a catalytic converter which comprises a main monolith catalyst and a heater disposed adjacent to and upstream of the main monolith catalyst. The heater can be obtained by providing electrodes on the metallic monolith according to the present invention and by placing a catalyst on the metallic monolith, if necessary. These catalytic converters can be desirably employed in the control of an automobile exhaust emission.

The method of manufacturing the heat-resistant metallic monolith preferred in the present invention will be described below.

First, Fe powder, Aℓ powder and Cr powder, or powders of alloys of these metals, with optional additions of Sn powder and Cu powder, are mixed to prepare a metal powder mixture having a composition essentially consisting of, as analyzed in weight percent, 3 to 20% Aℓ, 12 to 25% Cr and a balance of Fe with the sum Aℓ, Cr and Fe constituting 90̸% or more of the total composition. These metal powders may be produced by, for example, the carbonyl process, pulvarization, atomization, reduction, or electrolytic method. The size of the metal powders is dependent on the wall thickness of the cells of the honeycomb structure. For example, in case of extrusion, it is practically desirable that the largest particle size be about two thirds of that of an extruding die slit. Preferably, the contents of C, O and N in the metal powder mixture are respectively 10̸% or less, 3% or less and 1% or less.

It is preferable to prepare, by mixing, the metal powder material so that the material comprises at least about 30̸% by weight of a pure iron powder, because the material gives a sintered material of improved corrosion resistance. The reason is presumed to be that debinding is made well resulting in lower carbon content. As the pure iron powder, there is preferable used an iron carbonyl powder produced by the carbonyl method, because it gives further improved debinding.

In case of the extrusion, subsequently, the metal powder mixture is blended into an organic binder, such as methyl cellulose or polyvinylalcohol, and water to produce a formable mixture, and that mixture is then formed into a shape of a desired honeycomb configuration by the extrusion.

When the metal powder mixture is blended into the organic binder and water, prior to the addition of water, an antioxidant, such as oleic acid, may be added to the metal powder mixture. Alternatively, powders of metals which are subjected to anti-oxidation process may be employed.

The use of oxide as a forming aid or the like disturbs sintering and is therefore undesirable.

Next, the shaped honeycomb body is sintered in a non-oxdizing atmosphere at a temperature ranging between 10̸0̸0̸ and 1450̸°C. During the sintering in the non-oxidizing atmosphere containing hydrogen, the organic binder is decomposed and thereby removed with Fe or the like acting as a catalyst, and a good sintered body (a metal monolith) can therefore be obtained.

If the sintering temperature is lower than 10̸0̸0̸0̸°C, no sintering is achieved. Sintering conducted at a temperature higher than 1450̸°C causes deformation of the resulting sintered body or increases production cost and is therefore undesirable.

When a sinterable metal powder honeycomb monolith structure is to be sintered, the sinterable body is preferably encased in a sintering jig and thereby disposed close to or in contact with the jig. The sintering jig can be made of any material. Examples of such materials include metals, such as stainless steel, Mo and W, and ceramics, such as alumina, graphite and SiC.

The sintering time is appropriately determined such that the contents of C, N and O are within the above-described range. The preferred length of time is 2 hours or longer.

Thereafter, a heat-resistant metal oxide is preferably coated on the surface of the cell walls and that of the pores of the obtained sintered body by any of the following methods wherein:
(1) the metal monolith (sintered material) is kept in a hydrogen-containing gas atmosphere of 50̸0̸-1,30̸0̸°C.
(2) the metal monolith is subjected to the heat-treatment in an oxidizing atmosphere at a temperature ranging between 70̸0̸ to 120̸0̸°C.
(3) Aℓ or the like is plated on the surface of the cell walls and that of the pores of the sintered body (the metal monolith) (e.g., vapor plating) and that sintered body is subjected to the heat-treatment in an oxidizing atmosphere at a temperature between 70̸0̸ and 120̸0̸°C.
(4) the metal monolith is dipped into a molten metal, such as Aℓ, and that metal monolith is subjected to the heat-treatment in an oxidizing atmosphere at a temperature between 70̸0̸ and 120̸0̸°C.
(5) alumina sol or the like is coated on the surface of the cell walls and that of the pores of the sintered body (the metal monolith) and that sintered body is subjected to the heat-treatment in an oxidizing atmosphere at a temperature between 70̸0̸ and 120̸0̸°C.

To enhance resistance to heat and oxidation, heat-treatment conducted at a temperature ranging between 90̸0̸ and 120̸0̸°C is preferred.

Of the above methods, the method (1) can form a dense alumina-based protective film of excellent adhesion and heat resistance and accordingly can give a metal monolith of excellent oxidation resistance and corrosion resistance.

In the method (1), the hydrogen-containing gas atmosphere preferably has a dew point of -70̸°C to -40̸°C.

Although the thus-obtained heat-resistant metallic monolith may have any honeycomb configuration, in a metallic monolith which is designed for use as a catalyst carrier, heater and catalytic converter, the cell density ranges from 0.9 to 233 cells/cm² (6 to 1500 cells/in²) with a cell wall thickness ranging from 50̸ to 20̸0̸0̸ µm.

To achieve sufficient mechanical strength and resistance to oxidation and corrosion, the porosity of the heat-resistant metallic monolith will be held between 0̸ and 50̸% by volume, and more preferably, less than 25% by volume. In a heat-resistant metallic monolith designed for use as a catalyst carrier, the porosity will be held 5% or above to ensure close contact between the metallic monolith and a catalyst layer.

Illustrating the heat-resistance of the heat-resistant metallic monolith with a heat-resistant metal oxide coated on the surface of the cell walls and that of the pores thereof according to the present invention, it is desired that an increase in the weight of a metallic monolith after being fired for 10̸0̸0̸ hours in an atmosphere at 90̸0̸°C be within 10̸% by weight of the total weight.

The term, "honeycomb monolith or honeycomb structure" is employed in this application to refer to an integral body having a large number of passages partitioned by the walls, as shown in Fig. 1. The passages have any cross-sectional form (cell shape), e.g., a circular, polygonal or corrugated form.

The present invention will further be illustrated in the following examples which are intended to be illustrative, but not limiting, of this invention.

### Example 1

Fe powder prepared by the carbonyl process, Aℓ powder prepared by atomization, Cr powder prepared by the electrolytic method, Fe-Aℓ alloy powder prepared by pulverization and Fe-Cr alloy powder prepared by atomization, all having a particle size of 80 µm (30̸0̸ mesh) or less, were mixed to prepare mixtures having the compositions listed in Table 1. Thereafter, each mixture was blended first into 5% by weight of methyl cellulose which served as an organic binder and 2% by weight of oleic acid which served as a lubricant and as an antioxidant of the metal powders then 20̸% by weight of water, to produce a formable admixture.

The obtained admixture was deaerated by means of a pug mill and then extruded through a die to form square cell honeycomb structure having a diameter of 10̸0̸ mm, a cell wall thickness of 75 µm and a cell density of 62 cells/cm².

After the shaped honeycomb structure was dried, it was sintered for 4 hours in hydrogen or hydrogen/argon atmosphere at a temperature between 120̸0̸ and 1450̸°C and then fired in an atmosphere for 2 hours at a temperature between 90̸0̸ and 110̸0̸°C to form an oxide film on the surface thereof.

The porosity, oxidation resistance (represented by an increase in weight caused by firing in an atmosphere for 10̸0̸0̸ hours at 90̸0̸°C) and corrosion resistance (represented by a reduction in weight caused by dipping in an aquare solution of HCℓ having pH of 1 for 1 hour) of the obtained honeycomb structures were measured. The results of the measurements are also shown in Table 1. The porosity was measured by the Archimedes' method.

As can be seen from Table 1, inclusion of less than 2.5% by weight of Aℓ is disadvantageous to provide heat-resistant alumina film and therefore deteriorates oxidation resistance. Inclusion of more than 30̸% by weight of Aℓ, provides undersintering and deteriorates oxidation resistance.

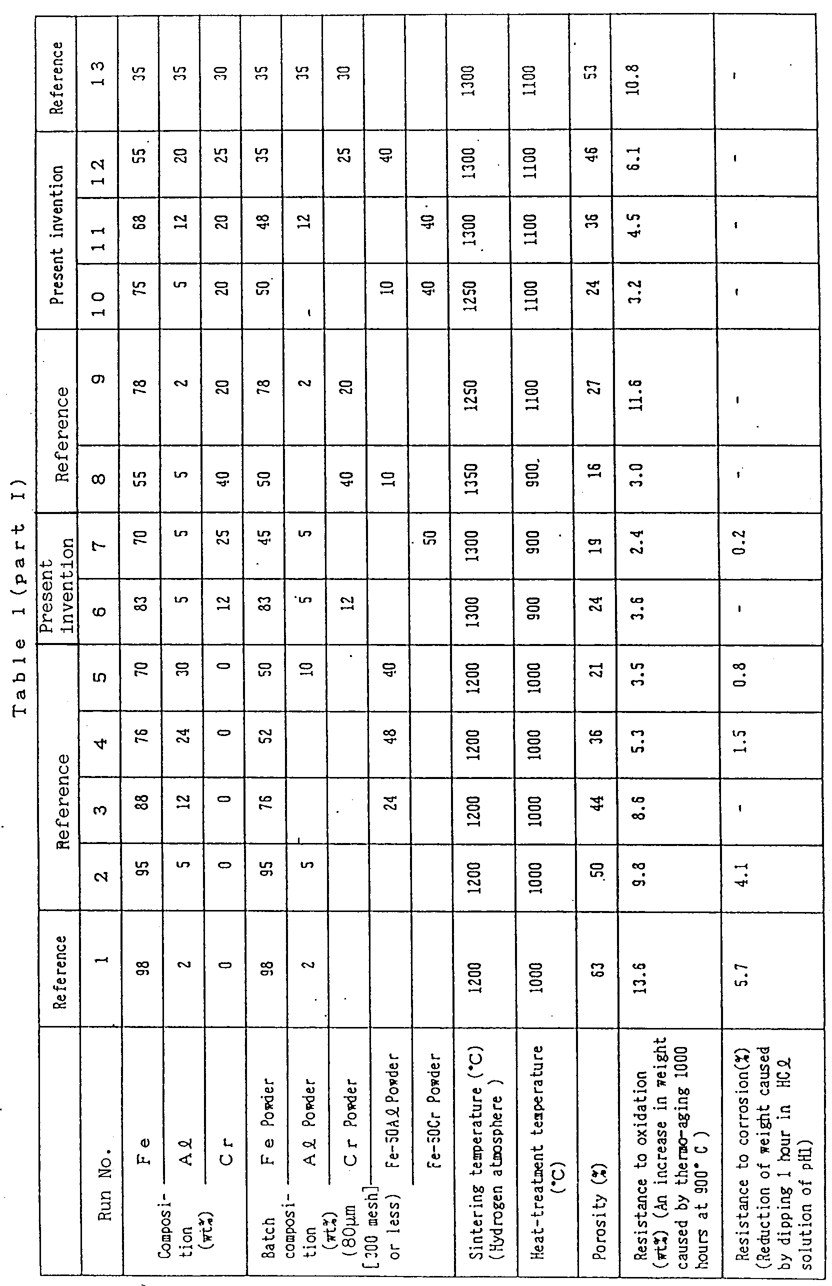

**Table 1 (part II)**

| | | Reference | Present invention | | | | | |
|---|---|---|---|---|---|---|---|---|
| Run No. | | 14 | 15 | 16 | 17 | 18 | 19 | 20 |
| Composition (wt%) | Fe | 77.5 | 76 | 76 | 63 | 72 | 85 | 70 |
| | Aℓ | 2.5 | 4 | 12 | 12 | 3 | 3 | 8 |
| | Cr | 20 | 20 | 12 | 25 | 25 | 12 | 22 |
| Batch composition (wt%) (80µm [300 mesh] or less) | Fe Powder | 55 | 52 | 52 | 26 | 49 | 70 | 60 |
| | Aℓ Powder | | | | | | | |
| | Cr Powder | | | | | 5 | | |
| | Fe-50AℓPowder | 5 | 8 | 24 | 24 | 6 | 6 | 16 |
| | Fe-50Cr Powder | 40 | 40 | 24 | 50 | 40 | 24 | 44 |
| Sintering temperature (°C) (Hydrogen atmosphere ) | | 1250 | 1400 | 1400 | 1450 | 1370 | 1350 | 1430 |
| Heat-treatment temperature (°C) | | 1100 | 1100 | 1050 | 1100 | 1100 | 1050 | 1100 |
| Porosity (%) | | 25 | 8 | 22 | 10 | 12 | 13 | 9 |
| Resistance to oxidation (wt%) (An increase in weight caused by thermo-aging 1000 hours at 900° C ) | | 9.7 | 1.0 | 3.0 | 1.9 | 4.8 | 7.1 | 2.0 |
| Resistance to corrosion(%) (Reduction of weight caused by dipping 1 hour in HCℓ solution of pH1) | | - | - | - | - | - | - | - |

### Example 2

Fe powder, Aℓ powder, Cr powder, Fe-Aℓ alloy power and Fe-Cr alloy powder, having a particle size of 30̸0̸ mesh or less and prepared in the same manner as Example 1, were mixed with Cu powder and Sn powder, having a particle size of 80 µm (30̸0̸ mesh) or less, to prepare various powder mixtures having the compositions listed in Table 2, and honeycomb structures were manufactured using those mixtures in the same manner as that of Example 1.

The porosity and oxidation resistance of the obtained honeycomb structures were measured. The results of the measurements are shown in Table 2.

As is clear from Table 2, addition of Cu and Sn powders lowers the sintering temperature or decreases the porosity in the case of the sintering performed at the same temperature. However, introduction of Cu and Sn powders deteriorates oxidation resistance, and should therefore be restricted less than 10̸% by weight in total.

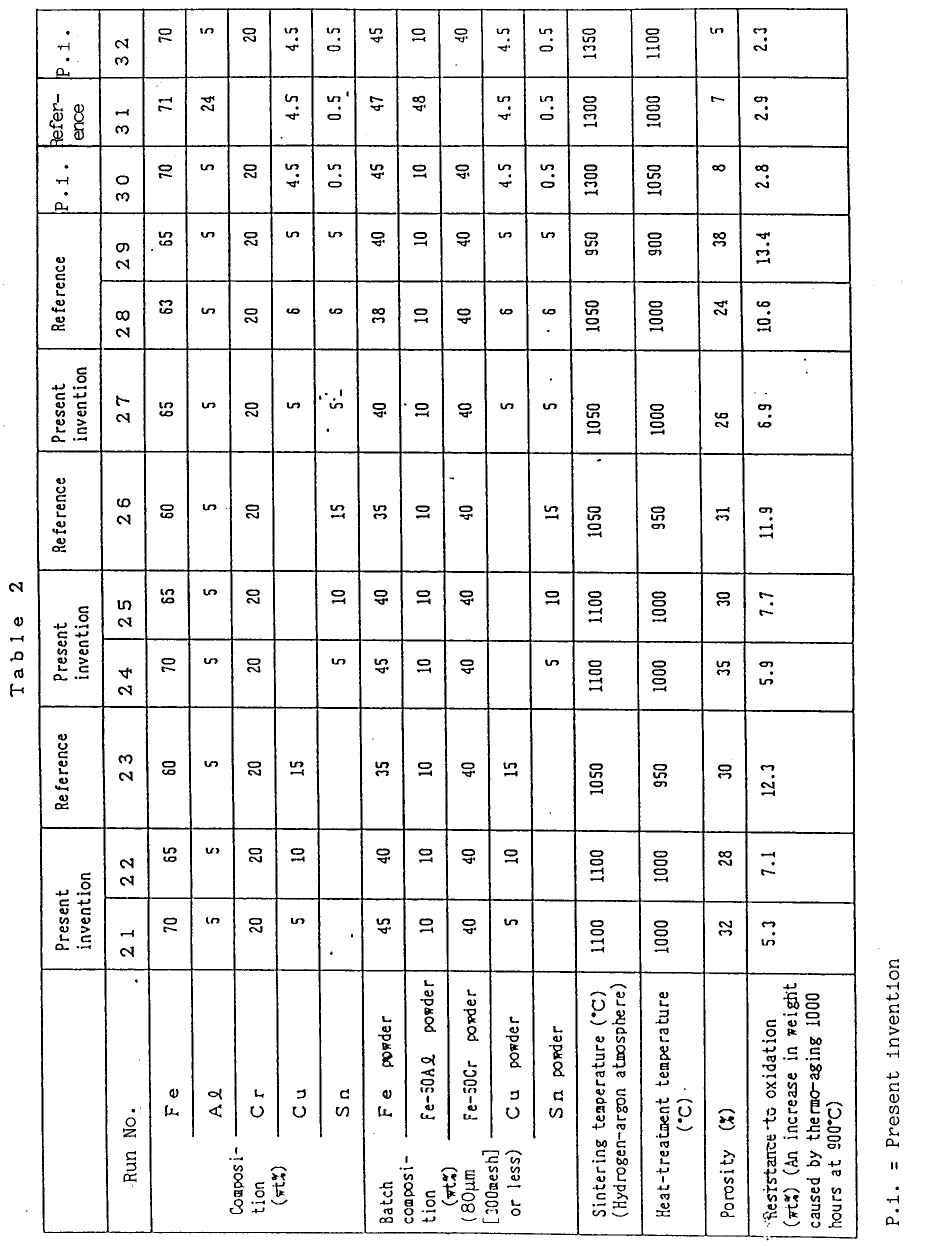

### Example 3

Sintered materials each consisting of a honeycomb structure having either of the following compositions were prepared using an extrusion die having 0.1 mm (4 mil) in rib thickness and 62 cells/cm² (400 cells/in²) in number of through-holes, according to the same method as in Example 1.
(1) Fe-20̸Cr-5Al
(2) Fe-23Al

Then, there were investigated preferable conditions for treating each of the above sintered materials to form a film thereon.

Incidentally, the sintered materials having a Fe-20̸Cr-5Al composition were obtained by firing an iron carbonyl powder, a ground Fe-50̸Al powder and a ground Fe-60̸Cr powder at 1,320̸° C; the sintered materials of a Fe-23Al composition were obtained by firing an iron carbonyl powder and a ground Fe-50̸Al powder at 1,320̸° C.

The furnace used for treating each sintered material of honeycomb structure (Run Nos. 38-43) was a 30̸0̸-liter gas furnace of internal heating type comprising a W mesh heater and a Mo reflector. The gas flow rate employed was 1-10̸ liters/min. In Run Nos. 38-43, there was used a hydrogen gas or a hydrogen-nixtrogen mixture gas, in each of which gases the water content had been controlled.

The sintered materials of honeycomb structure having a film thereon were subjected to an oxidation resistance test by keeping them in an electric furnace at 1,0̸0̸0̸°C for 10̸0̸ hours to evaluate their weight increases and dimensional changes. The results are shown in Table 3. The surface films after the oxidation resistance test were observed by a SEM (scanning type electron microscope). Each film caused no peeling and had good adhesion.

Total oxidation amount was approximately expressed as a sum of [weight increase by preliminary oxidation (oxide film formation)] and [weight increase by oxidation resistance test (1,0̸0̸0̸°C x 10̸0̸ hours)].

As is clear from Table 3, comparison of Run Nos. 33-34 (Comparative Examples) with Run Nos. 35-38-40̸ (Examples) indicates that the total oxidation amounts of the Examples are smaller than those of the Comparative Examples and that protective film of superior oxidation resistance were formed in the Examples. Comparison of Run Nos. 36-37 (Comparative Examples) with Run Nos. 41-43 (Examples) indicates the same thing.

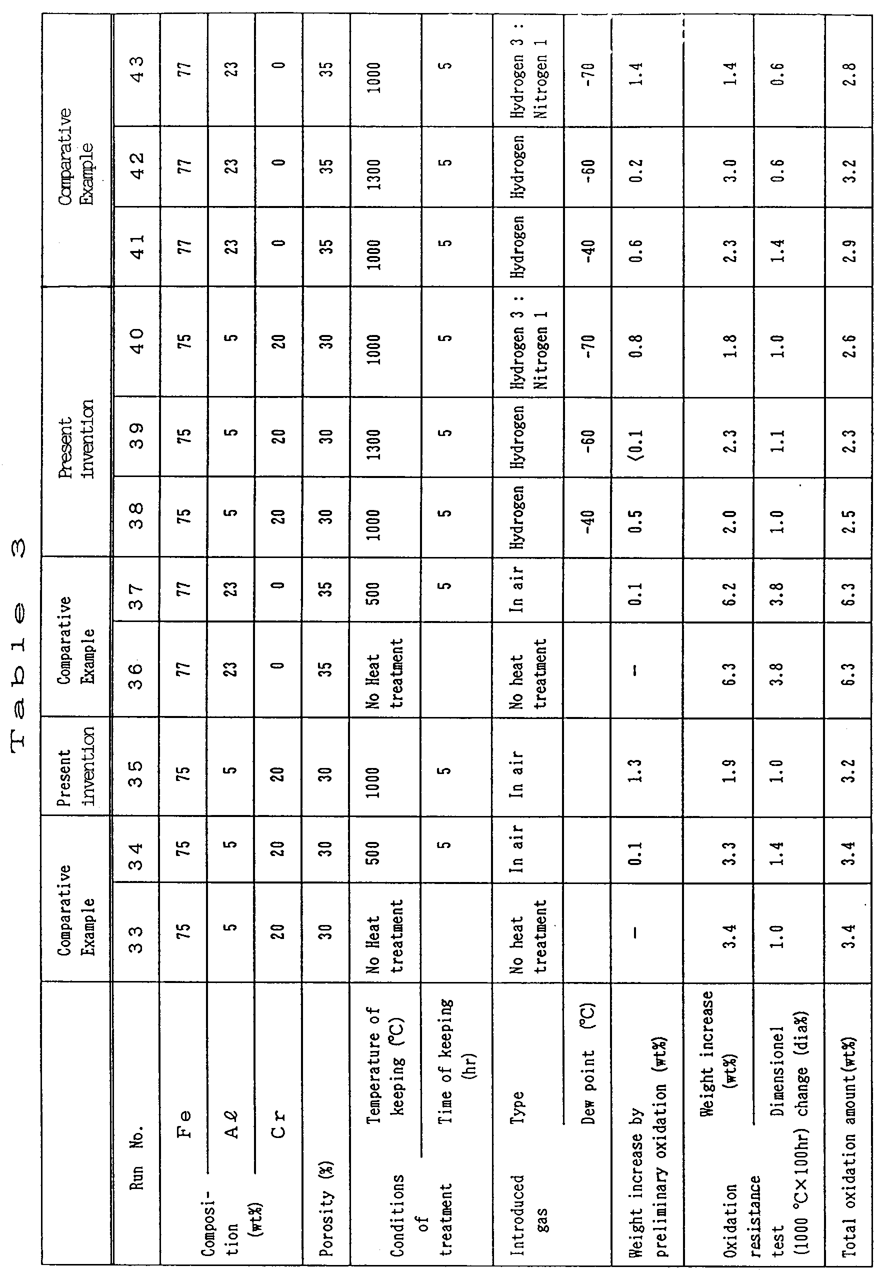

### Example 4

There were mixed an iron carbonyl powder of 5 µm in average particle diameter, a ground Fe-Al alloy powder of 26 µm in average particle diameter, an electrolytic Cr powder of 43 µm in average particle diameter, an atomized Fe-30̸ Cr alloy powder of 20̸ µm in average particle diameter and a ground Fe-60̸CR alloy powder of 18 µm in average particle diameter so as to give a composition shown in Table 4. Each mixture was subjected to the same procedure as in Example 1 to prepare a honeycomb structure.

Each of the honeycomb structures was measured for porosity and oxidation resistance in the same manner as in Example 1. The results are shown in Table 4.

As is clear from Table 4, use of 30̸% by weight or more of an iron powder in material powder gives improved oxidation resistance and corrosion resistance.

**Table 4**

| | | Present invention | | Comp. Ex. | P.i. | Comp. Ex. | Present invention | | |
|---|---|---|---|---|---|---|---|---|---|
| Run No. | | 44 | 45 | 46 | 47 | 48 | 49 | 50 | 51 |
| Composition (wt%) | Fe | 75 | 73 | 66 | 75 | 71 | 75 | 74 | 79 |
| | Aℓ | 5 | 5 | 8 | 5 | 3 | 5 | 8 | 5 |
| | Cr | 20 | 22 | 26 | 20 | 26 | 20 | 18 | 18 |
| Batch Composition (wt%) (80µm [300 mesh] or less) | Fe Powder | 70 | 68 | 40.7 | 56.7 | 50.7 | 23.3 | 24 | 30 |
| | Fe-50Aℓ Powder | 10 | 10 | 16 | 10 | 6 | 10 | 16 | 10 |
| | Cr Powder | 20 | 22 | | | 5 | | | |
| | Fe-30Cr Powder | | | | | | 66.7 | 60 | 60 |
| | Fe-60Cr Powder | | | 43.3 | 33.3 | 43.3 | | | |
| Sintering temperature (°C) (Hydrogen atmosphere) | | 1300 | 1350 | 1350 | 1350 | 1400 | 1300 | 1300 | 1400 |
| Heat-treatment temperature (°C) | | 1050 | 1100 | 1050 | 1100 | 1000 | 1000 | 1000 | 960 |
| Porosity (%) | | 21 | 16 | 29 | 30 | 16 | 21 | 37 | 19 |
| Resistance to oxidation (wt%) (An increase in weight caused by thermo-aging 1000 hours at 900°C) | | 2.1 | 1.6 | 2.8 | 2.5 | 3 | 4.1 | 4.6 | 3.5 |
| Resistance to corrosion (%) (Reductioin of weight caused by dipping 1 hour in HCℓ solution of pH1) | | 0.2 | 0.1 | 0.3 | 0.2 | 0.2 | 1.2 | 1.7 | 0.7 |
| Comp. Ex. = Comparative Example P.i. = Present invention | | | | | | | | | |

### Example 5

Fe powder, Fe-Al powder (Al : 50̸ wt%) and Fe-Cr powder (Cr : 50̸ wt%), having average particle sized of 10̸,20̸ and 22 µm, were mixed to prepare a mixture having a composition of Fe-22Cr-5Al (% by weight), and the obtained mixture was then blended into an organic binder (methyl cellulose), an antioxidant (oleic acid) and water to produce a readily formable body. That body was formed into a square cell honeycomb structure having a rib thickness of 0.1 mm (4 mil) and a cell density of 47 cells/cm² (300 cells/in²) by extrusion. The extruded honeycomb structure was dried and fired in H₂ atmosphere at 130̸0̸° C. Thereafter, the obtained honeycomb structure was subjected to heat-treatment in atmosphere at 10̸0̸0̸° C. One electrode was provided on the central axis of the obtained honeycomb structure while the other electrode was provided on the outer periphery thereof.

The obtained honeycomb structure had a porosity of 22% by volume and an average pore diameter of 5 µm.

### Example 6

A honeycomb structure with a catalyst supported thereon was obtained by coating γ-Al₂O₃ on the honeycomb structure obtained in Example 5, by loading 20̸ g/ft³ Pt and Pd respectively and then by firing the whole at 60̸0̸° C. thereafter, the electrodes were provided in the same manner as that of example 5.

### Example 7

A honeycomb structure having a composition of Fe-25Al was obtained in the same manner as that of Example 5. This honeycomb structure had a porosity of 25% by volume and an average pore diameter of 4 µm.

### Example 8

A honeycomb structure with a catalyst carried thereon was obtained in the same manner as that of Example 6 using the honeycomb structure obtained in Example 7.

### Comparative Example 1

Electrodes were provided on a foil-type metal honeycomb (having a rib thickness of 0.05 mm (2 mil), a passage density of 62 cells/cm² (400 cells/in²), and a composition of Fe-20̸Cr-5Al) which was on sale.

### Comparative Example 2

The sample of Comparative Example 1 was subjected to oxidation in the manner described in U.K. Patent 1492929. The oxidation was conducted by maintaining the sample in the air at a temperature of 10̸0̸0̸°C for 1 hour, and a catalyst was supported on that sample in the same manner as that of Example 6.

### [Evaluation]

### (Heat cycle durability test)

With the use as a preheater for a catalyst for use in automobile exhaust emission control in mind, supply of a current by battery of 12V for 30̸ seconds was repeated 30̸0̸ times while an air was caused to flow through the passages at a rate of 1.0̸m³/min. The temperature of the cell walls reached about 40̸0̸ to 50̸0̸° C.

### (Catalyst peeling test)

Table 5 shows a change in the weight of the catalyst, caused by the heat cycle durability test, and Table 6 shows a change in the weight of the sample subjected to the heat cycle test, caused for forcibly causing the catalyst to peel by the ultrasonic washing.

**Table 5**

| Rate of change in the catalyst weight caused by the heat cycle durability test | |
|---|---|
| Sample | Rate of reduction in weight(%) |
| Example 6 | 0̸.8 |
| Example 8 | 0̸.6 |
| Comparative Example 2 | 3.5 |

**Table 6**

| Amount of catalyst which peels of the sample subjected to the heat cycle durability test | |
|---|---|
| Sample | Rate of reduction in weight (%) |
| Example 6 | 1.2 |
| Example 8 | 0̸.8 |
| Comparative Example 2 | 10̸.2 |

when the foil type metal honeycomb was subjected to heat cycle durability test, the flat plate to corrugated plate join was cracked and telescope phenomenon occurred whereas no change was seen on the samples of Examples of the present invention.

### (Heat generation checking test)

A current was supplied to the samples subjected to the heat cycle durability test using a battery of 12V for 30̸ minutes while an air was caused to flow at a rate of 1.0̸ m³/min. At that time, the temperature of the cell walls located near the center of the honeycomb structure was measured at 5 points. Table 7 shows the time required for the temperature to reach 350̸° C.

**Table 7**

| Sample | Time required (sec) |
|---|---|
| Example 5 | 8.5 |
| Example 6 | 10̸.0̸ |
| Example 7 | 9.5 |
| Example 8 | 11.5 |
| Comparative Example 1 | 14.0̸ |
| Comparative Example 2 | 16.5 |

In Examples 5 to 8, temperature distribution was within the range of ±20̸° C while in Comparative Examples it was within the range of ±50̸° C.

### (Checking for the performance required for a preheater for use in automobile exhaust emission control)

The catalytic converters were obtained by providing as a preheater each of the samples of this invention in from of a three-way catalyst which was on sale. An exhaust gas of the engine was introduced to each converter for 2 minutes to raise the temperature thereof from 10̸0̸° C up to 420̸° C at a fixed speed and the temperature was then kept at 420̸° C for 1 minutes. The conversion of the components present in the exhaust at that time was measured to check the performance of the above-described catalytic converters when an engine was started.

The samples subjected to the heat cycle test were used as the heaters in a state in which they were energized for 1 minutes by a battery of 12V. Table 8 shows the average conversion of the component gases measured for three minutes.

**Table 8**

| Average Conversion (%) | | | |
|---|---|---|---|
| Sample | CO | HC | NOx |
| Without heater | 50̸ | 37 | 47 |
| Example 5 | 62 | 47 | 60̸ |
| Example 6 | 68 | 52 | 65 |
| Example 7 | 62 | 46 | 59 |
| Example 8 | 67 | 50̸ | 64 |
| Comparative Example 1 | 56 | 42 | 53 |
| Comparative Example 2 | 60̸ | 45 | 55 |

## Claims

1. A heat-resistant metallic monolith comprising:
a porous sintered metal monolith manufactured by forming metal powders into a shape of a honeycomb configuration having a plurality of passages partitioned by walls and sintering said shape, said metal monolith consisting essentially of 3 to 20% by weight of Al, 12 to 25% by weight of Cr, 0 to 10% by weight of Sn, 0 to 10% by weight of Cu, the sum Sn and Cu being not more than 10% by weight, and the balance Fe; and
a heat-resistant metal oxide coated on a surface of cell walls and that of pores in said metal monolith.

2. A heat-resistant metallic monolith according to claim 1, wherein said porous sintered metal monolith contains at least one of Sn and Cu.

3. A heat-resistant metallic monolith according to claim 1 or claim 2, wherein said porous sintered metal monolith has a porosity in the range 5 to 50% by volume.

4. A catalyst carrier comprising a heat-resistant metallic monolith according to any one of claims 1 to 3.

5. A honeycomb heater comprising:
a heat-resistant metallic monolith according to any one of claims 1 to 3 and electrodes provided on said metallic monolith.

6. A catalytic converter comprising:
a main monolith catalyst:
a heater disposed adjacent to and upstream of said main monolith catalyst, said heater including a heat-resistant metallic monolith according to any one of claims 1 to 3 and electrodes provided on said heat-resistant metallic monolith.

7. A catalytic converter according to claim 6 wherein a catalyst is supported on said heat-resistant metallic monolith.

8. A catalytic converter comprising:
a heat-resistant metallic monolith according to any one of claims 1 to 3;
a catalyst supported on said heat-resistant metallic monolith; and
electrodes provided on said heat-resistant metallic monolith.

9. A method of manufacturing a heat-resistant metallic monolith, comprising the steps of:
mixing metal powders consisting essentially of 3 to 20% by weight of Al, 12 to 25% by weight of Cr, 0 to 10% by weight of Sn, 0 to 10% by weight of Cu, the sum Sn and Cu being not more than 10% by weight, and the balance Fe, an organic binder and water to prepare a mixture;
forming said mixture into a shape of a desired honeycomb configuration;
sintering said shape in a non-oxidizing atmosphere at a temperature between 1000 and 1450°C; and
coating a heat-resistant metal oxide on a surface of cell walls and that of pores of the obtained sintered body.

10. A method of manufacturing a heat-resistant metallic monolith according to claim 9, wherein the metal powder material comprises at least 30% by weight of a pure iron powder.

11. A method of manufacturing a heat-resistant metallic monolith according to claim 10, wherein the pure iron powder is an iron carbonyl powder.

12. A method of manufacturing a heat-resistant metallic monolith according to any one of claims 9 to 11, which comprises keeping the sintered body in a hydrogen-containing gas atmosphere of 500-1,300°C to form a heat-resistant metal oxide thereon.

13. A method of manufacturing a heat-resistant metallic monolith according to claim 12, wherein the hydrogen-containing gas atmosphere has a dew point of -70°C to -40°C.

## Patentansprüche

1. Hitzebeständiger metallischer Monolith, umfassend:
einen porösen Sintermetallmonolithen, hergestellt durch Formen von Metallpulvern zu einem Formling mit Wabenkonfiguration mit einer Vielzahl von Durchgängen, die durch Wände unterteilt sind, sowie Sintern des Formlings, wobei der Metallmonolith im wesentlichen aus 3 bis 20 Gew.-% Al, 12 bis 25 Gew.-% Cr, 0 bis 10 Gew.-% Sn, 0 bis 10 Gew.-% Cu, wobei die Summe von Sn und Cu nicht mehr als 10 Gew.-% ausmacht, und ansonsten aus Fe besteht; und
ein hitzebeständiges Metalloxid, das auf eine Oberfläche von Zellwänden und auf jene von Poren im Metallmonolithen aufgetragen ist.

2. Hitzebeständiger metallischer Monolith nach Anspruch 1, worin der poröse Sintermetallmonolith zumindest eines von Sn und Cu enthält.

3. Hitzebeständiger metallischer Monolith nach Anspruch 1 oder 2, worin der poröse Sintermetallmonolith eine Porosität im Bereich von 5 bis 50 Vol.-% aufweist.

4. Katalysatorträger, umfassend einen hitzebeständigen metallischen Monolithen nach einem der Ansprüche 1 bis 3.

5. Wabenheizgerät, umfassend:
einen hitzebeständigen metallischen Monolithen nach einem der Ansprüche 1 bis 3 und auf dem metallischen Monolithen vorgesehene Elektroden.

6. Katalytischer Umwandler, umfassend:
einen Haupt-Monolithkatalysator;
ein daran angrenzendes und stromauf von diesem Haupt-Monolithkatalysator angeordnetes Heizgerät, wobei das Heizgerät einen hitzebeständigen metallischen Monolithen nach einem der Ansprüche 1 bis 3 und auf dem hitzebeständigen metallischen Monolithen vorgesehene Elektroden umfaßt.

7. Katalysischer Umwandler nach Anspruch 6, worin vom hitzebeständigen metallischen Monolithen ein Katalysator getragen wird.

8. Katalysischer Umwandler, umfassend:
einen hitzebeständigen metallischen Monolithen nach einem der Ansprüche 1 bis 3;
einen vom hitzebeständigen metallischen Monolithen getragenen Katalysator; und
auf dem hitzebeständigen metallischen Monolithen vorgesehene Elektroden.

9. Verfahren zur Herstellung eines hitzebeständigen metallischen Monolithen, folgende Schritte umfassend:
Vermischen von Metallpulvern, die im wesentlichen aus 3 bis 20 Gew.-% Al, 12 bis 25 Gew.-% Cr, 0 bis 10 Gew.-% Sn, 0 bis 10 Gew.-% Cu, wobei die Summe von Sn und Cu nicht mehr als 10 Gew.-% ausmacht, und ansonsten aus Fe bestehen, mit einem organischen Bindemittel und Wasser, um ein Gemisch herzustellen;
Formen des Gemischs zu einem Formling mit einer gewünschten Wabenkonfiguration;
Sintern des Formlings in nichtoxidierender Atmosphäre bei einer Temperatur zwischen 1.000°C und 1.450°C; und
Aufbringen eines hitzebeständigen Metalloxids auf eine Oberfläche von Zellwänden und auf jene von Poren des erhaltenen Sinterkörpers.

10. Verfahren zur Herstellung eines hitzebeständigen metallischen Monolithen nach Anspruch 9, worin das Metallpulvermaterial zumindest 30 Gew.-% Reineisenpulver enthält.

11. Verfahren zur Herstellung eines hitzebeständigen metallischen Monolithen nach Anspruch 10, worin das Reineisenpulver ein Carbonyleisenpulver ist.

12. Verfahren zur Herstellung eines hitzebeständigen metallischen Monolithen nach einem der Ansprüche 9 bis 11, welches das Halten des Sinterkörpers in einer wasserstoffhältigen Gasatmosphäre mit 500-1.300°C umfaßt, um darauf ein hitzebeständiges Metalloxid zu bilden.

13. Verfahren zur Herstellung eines hitzebeständigen metallischen Monolithen nach Anspruch 12, worin die wasserstoffhältige Gasatmosphäre einen Taupunkt von -70°C bis -40°C aufweist.

## Revendications

1. Monolithe métallique thermorésistant comprenant :
un monolithe métallique fritté poreux fabriqué en donnant à des poudres de métal la forme d'une configuration en nid d'abeilles ayant un certain nombre de passages séparés par des parois et en frittant ladite forme, ledit monolithe métallique consistant essentiellement en 3 à 20% en poids de Al, 12 à 25% en poids de Cr, 0 à 10% en poids de Sn, 0 à 10% en poids de Cu, la somme de Sn et Cu ne dépassant pas 10% en poids et le reste étant Fe ; et
un oxyde de métal thermorésistant enduit sur une surface des parois des cellules et de celle des pores dans ledit monolithe métallique.

2. Monolithe métallique thermorésistant selon la revendication 1, où ledit monolithe métallique fritté poreux contient au moins l'un de Sn et Cu.

3. Monolithe métallique thermorésistant selon la revendication 1 ou la revendication 2, où ledit monolithe métallique fritté poreux a une porosité comprise entre 5 et 50% en volume.

4. Support de catalyseur comprenant un monolithe métallique thermorésistant selon l'une quelconque des revendications 1 à 3.

5. Réchauffeur en nid d'abeille comprenant :
un monolithe métallique thermorésistant selon l'une quelconque des revendications 1 à 3 et des électrodes prévues sur ledit monolithe métallique.

6. Convertisseur catalytique comprenant :
un catalyseur monolithique principal :
un réchauffeur disposé adjacent à et en amont dudit catalyseur monolithe principal, ledit réchauffeur comprenant un monolithe métallique thermorésistant selon l'une quelconque des revendications 1 à 3 et des électrodes prévues sur ledit monolithe métallique thermorésistant.

7. Convertisseur catalytique selon la revendication 6 où un catalyseur est supporté sur ledit monolithe métallique thermorésistant.

8. Convertisseur catalytique comprenant :
un monolithe métallique thermorésistant selon l'une quelconque des revendications 1 à 3 ;
un catalyseur suppporté sur ledit monolithe métallique thermorésistant; et
des électrodes prévues sur ledit monolithe métallique thermorésistant.

9. Méthode de fabrication d'un monolithe métallique thermorésistant comprenant les étapes de :
mélanger des poudres métalliques consistant essentiellement en 3 à 20% en poids de Al, 12 à 25% en poids de Cr, 0 à 10% en poids de Sn, 0 à 10% en poids de Cu, la somme de Sn et Cu ne dépassant pas 10% en poids et le reste étant Fe, un liant organique et de l'eau pour préparer un mélange ;
donner audit mélange la forme d'une configuration en nid d'abeilles souhaitée ;
fritter ladite forme dans une atmosphère non oxydante à une température entre 1000 et 1450°C ; et
enduire un oxyde métallique thermorésistant sur une surface des parois des cellules et celle des pores du corps fritté obtenu.

10. Méthode de fabrication d'un monolithe métallique thermorésistant selon la revendication 9, où le matériau en poudre de métal comprend au moins 30% en poids d'une poudre de fer pur.

11. Méthode de fabrication d'un monolithe métallique thermorésistant selon la revendication 10, où la poudre de fer pur est une poudre de fer carbonyle.

12. Méthode de fabrication d'un monolithe métallique thermorésistant selon l'une quelconque des revendications 9 à 11 qui consiste à maintenir le corps fritté dans une atmosphère d'un gaz contenant de l'hydrogène entre 500 et 1300°C pour y former un oxyde métallique thermorésistant.

13. Méthode de fabrication d'un monolithe métallique thermorésistant selon la revendication 12, où l'atmosphère d'un gaz contenant de l'hydrogène a un point de rosée de -70°C à -40°C.
